# EUROPEAN PATENT APPLICATION

(11) **EP 4 455 749 A1**
(43) Date of publication of application: **30.10.2024**
(21) Application number: 22911180.2
(22) Date of filing: 19.12.2022
(51) Int. Cl.: G02B 6/44

(54) **OPTICAL FIBER CABLE AND METHOD FOR MANUFACTURING OPTICAL FIBER CABLE**

(30) Priority: 20.12.2021 JP 2021206244
(71) Applicant: SUMITOMO ELECTRIC INDUSTRIES, LTD., Osaka-shi, Osaka 541-0041 (JP)
(72) Inventor: HASHIMOTO, Yutaka, Osaka-shi, Osaka 541-0041 (JP); SATO, Fumiaki, Osaka-shi, Osaka 541-0041 (JP)
(74) Representative: Müller-Boré & Partner Patentanwälte PartG mbB
(86) International application number: PCT/JP2022/046681
(87) International publication number: WO 2023/120478

(57) **Abstract**

An optical fiber cable includes: a plurality of optical fibers; a cable sheath covering the plurality of optical fibers; and a plurality of tension member groups embedded in the cable sheath. Each of the plurality of tension member groups includes at least one tension member. In a cross section of the optical fiber cable perpendicular to a longitudinal direction of the optical fiber cable, roundness of the cable sheath is 85% or more.

## Description

### TECHNICAL FIELD

The present disclosure relates to an optical fiber cable and a method for manufacturing the optical fiber cable.

The present application is based on and claims priority to Japanese Patent Application No. 2021-206244 filed on December 20, 2021, and incorporates all the contents described in the Japanese Patent Application.

### BACKGROUND ART

Patent Literature 1 discloses an optical fiber cable laid in a duct such as a micro-duct using an air pumping method. When the optical fiber cable is air-pumped into the duct, a cable pump for pumping air into the duct is used. In a state where an inlet end of the duct is fixed to the cable pump, the optical fiber cable is inserted into a cable insertion tube of the cable pump. At this time, in order to close a gap between the optical fiber cable and an inner surface of the cable insertion tube, an annular sealing member is provided between the optical fiber cable and the cable insertion tube. More specifically, airtightness between the optical fiber cable and the inner surface of the cable insertion tube is secured in a state where the optical fiber cable is inserted into a central through hole of the sealing member. In this way, by securing the airtightness between the optical fiber cable and the inner surface of the cable insertion tube, it is suitably prevented that a part of an air flow sent out toward an inside of the duct from the cable pump flows into the cable insertion tube instead of into the duct. As a result, a pull-in force of the air flow from the inlet end to an outlet end of the duct is increased, and a pumping distance of the optical fiber cable can be extended.

### CITATION LIST

### PATENT LITERATURE

Patent Literature 1: JP2020-204752A

### SUMMARY OF INVENTION

An object of the present disclosure is to provide an optical fiber cable capable of extending a pumping distance and a method for manufacturing the optical fiber cable.

### SOLUTION TO PROBLEM

An optical fiber cable according to an aspect of the present disclosure includes: a plurality of optical fibers; a cable sheath covering the plurality of optical fibers; and a plurality of tension member groups embedded in the cable sheath. Each of the plurality of tension member groups includes at least one tension member. In a cross section perpendicular to a longitudinal direction of the optical fiber cable, roundness of the cable sheath is 85% or more.

### BRIEF DESCRIPTION OF DRAWINGS

[FIG. 1] FIG. 1 is a cross-sectional view showing an example of an optical fiber cable according to an embodiment of the present disclosure.
[FIG. 2] FIG. 2 is a diagram illustrating roundness of a cable sheath.
[FIG. 3] FIG. 3 is a cross-sectional view showing another example of the optical fiber cable according to the embodiment of the present disclosure.
[FIG. 4] FIG. 4 is a diagram showing a state of the optical fiber cable inserted into a cable insertion tube of a cable pump.

### DESCRIPTION OF EMBODIMENTS

### [Technical Problem]

When roundness of a cable sheath is low in a cross section of the optical fiber cable perpendicular to a longitudinal direction thereof, it is difficult to completely close the gap between the optical fiber cable and the inner surface of the cable insertion tube with the sealing member. In particular, when the central through hole of the sealing member is formed in a perfect circle shape but the roundness of the cable sheath is low, a gap is formed between the optical fiber cable and the sealing member. Therefore, the airtightness between the optical fiber cable and the inner surface of the cable insertion tube is decreased, and a pull-in force of the air flow from the inlet end to the outlet end of the duct is decreased. As a result, the pumping distance of the optical fiber cable decreases. From the above viewpoint, there is room for further improvement of a structure of the optical fiber cable for air pumping.

First, embodiments of the present disclosure will be listed and described.
(1) An optical fiber cable including: a plurality of optical fibers; a cable sheath covering the plurality of optical fibers; and a plurality of tension member groups embedded in the cable sheath, in which: each of the plurality of tension member groups includes at least one tension member; and in a cross section of the optical fiber cable perpendicular to a longitudinal direction of the optical fiber cable, roundness of the cable sheath is 85% or more.
   According to the above configuration, since the roundness of the cable sheath is 85% or more, a gap between the optical fiber cable and an inner surface of a cable insertion tube of a cable pump can be suitably closed by an annular sealing member. Therefore, airtightness between the optical fiber cable and the inner surface of the cable insertion tube can be increased, and a part of an air flow sent out from the cable pump toward an inside of a duct is suitably prevented from flowing into the cable insertion tube. As a result, a pull-in force of the air flow from an inlet end to an outlet end of the duct is increased, and a pumping distance of the optical fiber cable can be extended.
(2) The optical fiber cable according to the item (1), in which the plurality of tension member groups are arranged at equal intervals along a circumferential direction of the optical fiber cable.
   According to the above configuration, the plurality of tension member groups are arranged at equal intervals along the circumferential direction of the optical fiber cable. Therefore, during manufacturing of the optical fiber cable, the cable sheath is uniformly extruded from a mold (die) of an extruder over an entire circumference of the optical fiber cable. As a result, the roundness of the cable sheath can be increased. Each of the plurality of tension member groups may include at least one tension member. Further, the expression "arranged at equal intervals" does not necessarily mean only an arrangement at completely equal intervals. The intervals between the adjacent tension member groups may vary by about several percent. For example, when each interval between the adjacent tension member groups is set to 5 mm, the interval may have a variation of about 0.2 mm.
(3) The optical fiber cable according to the item (2), in which a number of the plurality of tension member groups is six or more.
   According to the above configuration, since six or more tension member groups are arranged at equal intervals along the circumferential direction of the optical fiber cable, a length of a portion of the cable sheath at which the tension member groups do not exist in the circumferential direction is shortened. Therefore, the cable sheath is uniformly extruded from the mold of the extruder over the entire circumference of the optical fiber cable. As a result, the roundness of the cable sheath can be increased.
(4) The optical fiber cable according to any one of the items (1) to (3), in which the optical fiber cable is a slotless cable.
   According to the above configuration, since the optical fiber cable is a slotless cable, that is, a spacer (in particular, a spacer in which a plurality of groove portions for storing the optical fibers are formed) is not provided in the optical fiber cable, so that the roundness of the cable sheath can be further increased. In particular, when the cable sheath is formed on an outer circumference of a cable core including a spacer, an outer shape of the cable sheath is affected by an outer shape of the spacer (for example, when the spacer includes five ribs, a cross-sectional shape of the cable sheath tends to be a pentagonal shape), so that it is difficult to form a cable sheath with high roundness. On the other hand, in the above configuration, since the spacer is not provided in the cable core, the roundness of the cable sheath can be increased. Further, since the spacer is not provided in the optical fiber cable, more optical fibers can be mounted in the optical fiber cable.
(5) A method for manufacturing the optical fiber cable according to any one of the items (1) to (4), the method including: a step of forming the cable sheath by an extruder to cover the plurality of optical fibers; and a step of cooling the formed cable sheath, in which vacuum sizing is applied in the cooling step.

Since the vacuum sizing is applied in the step of cooling the cable sheath, the roundness of the cable sheath can be further increased. Specifically, a cylindrical sizing die that defines a size of the outer shape of the cable sheath is provided in a sealed water tank under a reduced pressure environment, and the cable sheath is cooled under a reduced pressure environment by cooling water in the water tank in a state where the optical fiber cable is inserted into the cylindrical sizing die. Therefore, since the outer shape of the cable sheath is defined by an outer shape of the sizing die whose cross-sectional shape is close to a perfect circle, the roundness of the cable sheath is increased. As a result, the airtightness between the optical fiber cable and the inner surface of the cable insertion tube can be increased, and a part of the air flow sent out from the cable pump toward the inside of the duct is suitably prevented from flowing into the cable insertion tube. In this way, the pull-in force of the air flow from the inlet end to the outlet end of the duct is increased, and the pumping distance of the optical fiber cable can be extended.

### [Advantageous Effects of Invention]

According to the present disclosure, an optical fiber cable whose pumping distance can be extended and a method for manufacturing the optical fiber cable capable can be provided.

### [Description of Embodiments of Present Disclosure]

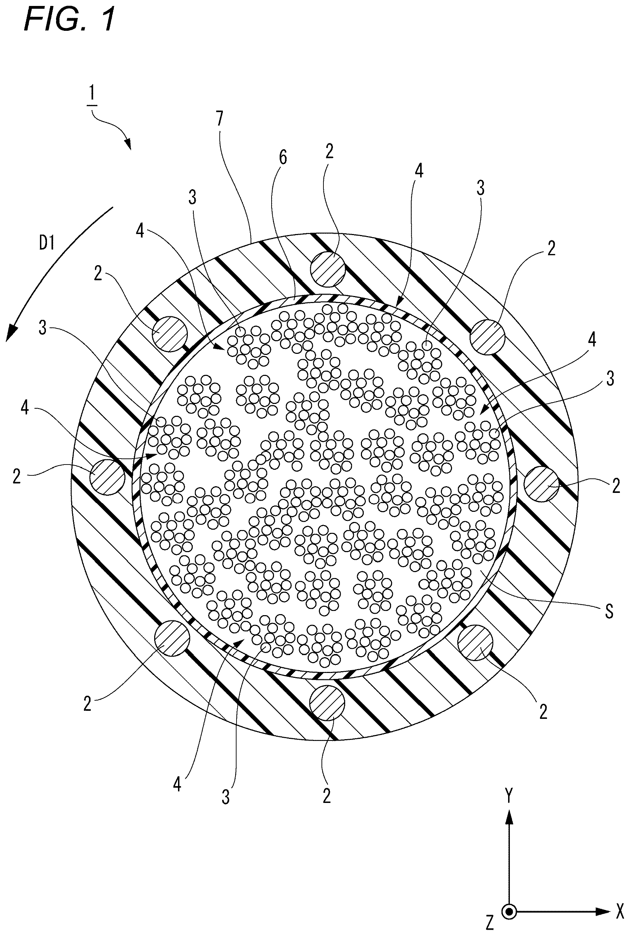

Hereinafter, an optical fiber cable 1 according to an embodiment (hereinafter referred to as the present embodiment) of the present disclosure will be described with reference to FIG. 1. The dimensions of members shown in each drawing are for convenience of description and may be different from actual dimensions of the members. In the present embodiment, an X axis direction, a Y axis direction, and a Z axis direction set for the optical fiber cable 1 shown in FIG. 1 will be appropriately referred to. Each of the X axis direction, the Y axis direction, and the Z axis direction is perpendicular to the remaining two directions. For example, the X axis direction is perpendicular to the Y axis direction and the Z axis direction. The Z axis direction corresponds to a longitudinal direction (the axial direction) of the optical fiber cable 1.

FIG. 1 is a cross-sectional view showing the optical fiber cable 1 according to the present embodiment. A cross section of the optical fiber cable 1 shown in FIG. 1 is a cross section perpendicular to the Z axis direction of the optical fiber cable 1. As shown in FIG. 1, the optical fiber cable 1 includes a plurality of optical fiber ribbons 4, a plurality of tension members 2, a water absorption tape 6, and a cable sheath 7.

The optical fiber cable 1 is, for example, an optical fiber cable for air pumping that is air-pumped through a duct such as a micro-duct. The plurality of optical fiber ribbons 4 are stored in a storing space S of the optical fiber cable 1. Each of the optical fiber ribbons 4 includes a plurality of (for example, 12) optical fibers 3 arranged in parallel and connected to each other. The optical fiber ribbon 4 may be, for example, an intermittently bonded optical fiber ribbon in which at least some of the adjacent optical fibers among the plurality of optical fibers 3 arranged in parallel are intermittently bonded along the Z axis direction. The intermittently bonded optical fiber ribbon may be manufactured by any method as long as the optical fibers are intermittently connected in the longitudinal direction.

The plurality of optical fiber ribbons 4 extend along the Z axis direction. In particular, the plurality of optical fibers 3 may be twisted, for example, spirally along the Z axis direction. As a type of the twisting, S-twist, Z-twist, or SZ twist in which S-twist and Z-twist are alternately performed may be adopted.

The optical fiber 3 includes a glass fiber and a resin coating covering the glass fiber. The glass fiber includes at least one core through which signal light propagates, and a cladding that covers the core. A refractive index of the core is larger than a refractive index of the cladding. In this example, the plurality of optical fiber ribbons 4 are stored in the optical fiber cable 1, but instead of the optical fiber ribbons 4, a plurality of single-core optical fibers 3 separated from one another may be stored in the optical fiber cable 1.

The plurality of (eight in this example) tension members 2 are embedded in the cable sheath 7. The plurality of tension members 2 extend along the Z axis direction, and are arranged at equal intervals along a circumferential direction D1 of the cable sheath 7 in the cross section of the optical fiber cable 1 shown in FIG. 1. That is, in the circumferential direction D1, an interval between the adjacent tension members 2 is constant. The number of the tension members 2 embedded in the cable sheath 7 is not particularly limited. In this respect, the number of tension members 2 is preferably 6 or more and 24 or less from the viewpoint of bending rigidity and flexibility of the optical fiber cable 1.

The tension member 2 is made of a tensile strength material that has resistance to tension and compression. Specifically, the tension member 2 may be made of a fiber-reinforced plastic (FRP) such as aramid FRP, glass FRP, and carbon FRP, or a metal material such as a copper wire. A cross section of each tension member 2 is substantially circular.

The water absorption tape 6 is longitudinally wrapped or spirally wrapped around a bundle of the plurality of optical fiber ribbons 4 (or a bundle of the plurality of optical fibers 3), for example. The water absorption tape 6 is made by performing water absorption processing by applying water absorption powder to a base cloth made of polyester, for example. Although not shown in FIG. 1, a rough wrapping yarn may be wrapped around the bundle of the plurality of optical fiber ribbons 4.

The cable sheath 7 is provided to cover around the bundle of the plurality of optical fiber ribbons 4 (or the bundle of the plurality of optical fibers 3). The cable sheath 7 is made of a resin such as polyvinyl chloride (PVC) or polyethylene (PE). The cable sheath 7 preferably contains a silicone-based release agent. The silicone-based release agent is contained at a ratio of, for example, 2 wt% or more, preferably 3 wt% or more and 5 wt% or less.

The cable sheath 7 is preferably made of a flame-retardant resin. The cable sheath 7 is made of, for example, flame-retardant PVC or flame-retardant polyethylene having an oxygen index of 50 or more. Accordingly, the optical fiber cable 1 conforms to the UL 1666 riser grade in the National Electric Code (NEC) standard of North America and the Cca class in the Construction Products Regulation (CPR) standard of Europe. The cable sheath 7 is, for example, a thermoplastic resin, and is formed by extrusion-molding a resin on the bundle of the plurality of optical fiber ribbons 4 around which the water absorption tape 6 is wrapped.

As shown in FIG. 1, in the cross section perpendicular to the Z axis direction, roundness of the cable sheath 7 is 85% or more. Here, the "roundness" is defined by a ratio between a longest radius (hereinafter, major radius) and a shortest radius (hereinafter, minor radius) among radii of the cable sheath in the cross section of the cable ((minor radius/major radius) × 100%). The higher the roundness of the cable sheath 7 is, the closer an outer shape of the cable sheath 7 is to a perfect circle.

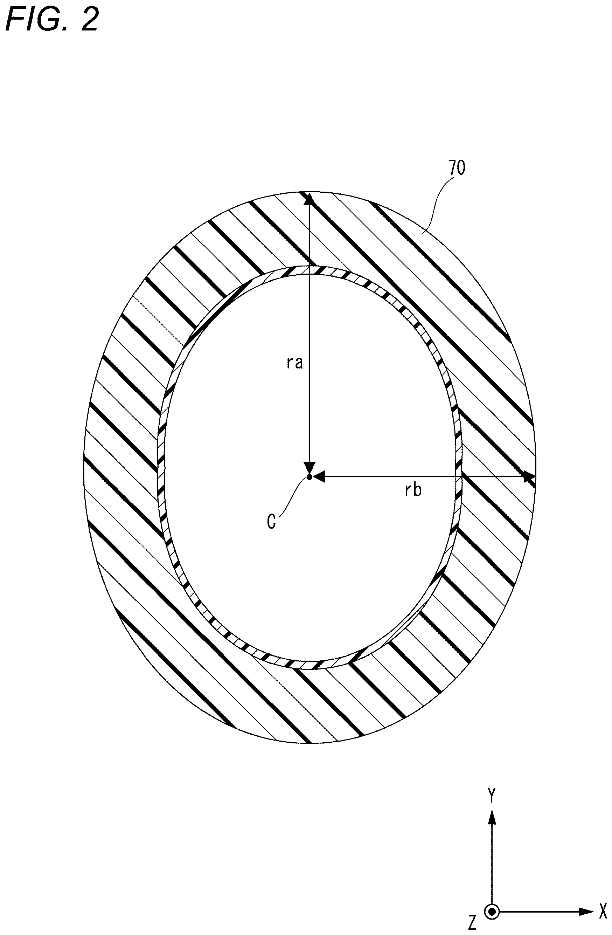

For example, as shown in FIG. 2, a cable sheath 70 in which a shape of a cross section perpendicular to the Z axis direction is substantially an ellipse will be described as an example. In the example shown in FIG. 2, when a major radius of the cable sheath 70 starting from a center point c of the cable sheath 70 is ra and a minor radius of the cable sheath 70 starting from the center point c is rb, roundness of the cable sheath 70 is defined as (rb/ra) × 100%.

In the present embodiment, the plurality of tension members 2 are arranged at equal intervals along the circumferential direction D1. In other words, in this example, six tension member groups each including one tension member 2 are arranged at equal intervals along the circumferential direction D1. In particular, since six or more tension members 2 are arranged at equal intervals along the circumferential direction D1, a length of a portion of the cable sheath 7 at which the tension members 2 do not exist in the circumferential direction D1 is shortened. Therefore, during manufacturing of the optical fiber cable 1, the cable sheath 7 is uniformly extruded from a mold (die) of an extruder over an entire circumference of the optical fiber cable 1. As a result, the roundness of the cable sheath 7 can be increased. In other words, since the plurality of tension members 2 are arranged at equal intervals along the circumferential direction D1, the optical fiber cable 1 including the cable sheath 7 whose roundness is 85% or more can be provided.

In the present embodiment, the plurality of tension members 2 are arranged at equal intervals along the circumferential direction D1, and a distance between the adjacent tension members 2 is constant. However, an arrangement configuration of the tension members in the present embodiment is not limited thereto. For example, a plurality of tension member groups each including a plurality of tension members may be arranged at equal intervals along the circumferential direction D1.

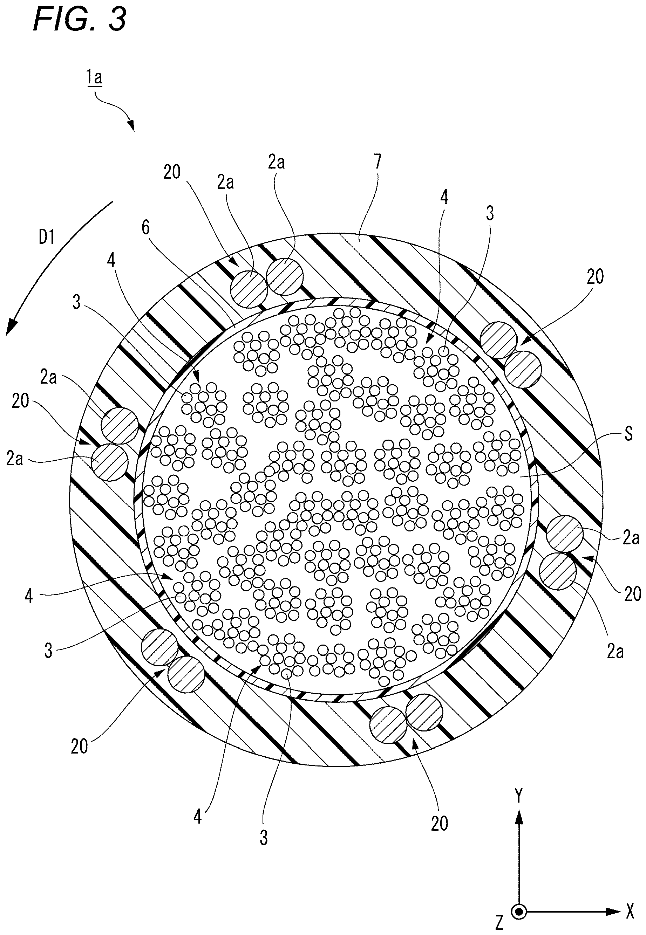

In this respect, in an optical fiber cable 1a shown in FIG. 3, a plurality of tension member groups 20 are arranged at equal intervals along the circumferential direction D1. Each of the tension member groups 20 includes a pair of (two) tension members 2a that are in contact with each other. Similarly, in the optical fiber cable 1a, since the plurality of tension member groups 20 are arranged at equal intervals along the circumferential direction D1, the cable sheath 7 is also uniformly extruded from a mold of an extruder over an entire circumference of the optical fiber cable 1. As a result, the roundness of the cable sheath 7 can be increased. In FIG. 3, six tension member groups 20 in each of which two tension members are paired are arranged at equal intervals along the circumferential direction D1, but the present embodiment is not limited thereto. In this respect, the number of the tension member groups 20 is preferably 6 or more and 24 or less from the viewpoint of bending rigidity and flexibility of the optical fiber cable 1.

Further, a method for manufacturing the optical fiber cable 1 according to the present embodiment includes a step of preparing a cable core, a step of forming the cable sheath 7, and a step of cooling the cable sheath 7. In the step of preparing the cable core, a cable core including the plurality of optical fiber ribbons 4 and the water absorption tape 6 covering the bundle of the plurality of optical fiber ribbons 4 is first prepared. Next, in the step of forming the cable sheath 7, the cable core and the plurality of tension members 2 are inserted into the extruder. Thereafter, the cable sheath 7 covering the cable core is formed by the mold of the extruder.

In the step of cooling the cable sheath 7, vacuum sizing is applied. Specifically, the cable sheath 7 is cooled by cooling water in a sealed water tank under a reduced pressure environment. A cylindrical sizing die for defining a size of an outer shape of the cable sheath 7 is provided in the sealed water tank. A shape of a cross section of the sizing die perpendicular to an axial direction is substantially a perfect circle. In a state where the optical fiber cable 1 is inserted into the sizing die, the cable sheath 7 is cooled by the cooling water in the water tank. Since the cable core expands toward an inner surface of the sizing die under a reduced pressure environment, the outer shape of the cable sheath 7 is defined by an outer shape of the sizing die whose cross-sectional shape is substantially a perfect circle. In this way, since the vacuum sizing is applied in the cooling step, the roundness of the cable sheath 7 is further increased.

Further, in the present embodiment, a spacer (in particular, a spacer in which a plurality of groove portions for storing the optical fiber ribbons 4 are formed) is not provided in the optical fiber cable 1, so that the roundness of the cable sheath 7 can be further increased. In particular, when the cable sheath 7 is formed on an outer circumference of a cable core having a spacer, the outer shape of the cable sheath 7 is affected by an outer shape of the spacer, so that it is difficult to form the cable sheath 7 with high roundness. On the other hand, in the present embodiment, since the spacer is not provided in the cable core, the roundness of the cable sheath 7 can be increased. Further, since the spacer is not provided in the optical fiber cable 1, more optical fibers 3 can be mounted in the optical fiber cable 1.

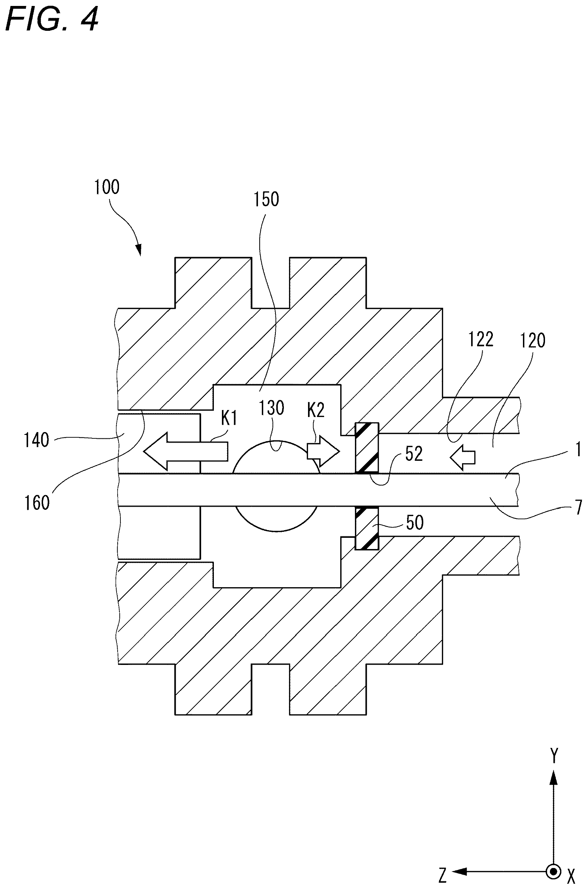

Next, with reference to FIG. 4, how the optical fiber cable 1 is air-pumped into a duct 140 using a cable pump 100 will be described below. FIG. 4 is a diagram showing a state of the optical fiber cable 1 inserted into a cable insertion tube 120 of the cable pump 100. As shown in FIG. 4, the optical fiber cable 1 is inserted into an inlet end of the duct 140 from the cable insertion tube 120 by being moved in a +Z direction.

In order to secure airtightness between the optical fiber cable 1 and an inner surface 122 of the cable insertion tube 120, an annular sealing member 50 is provided at a predetermined position on the cable insertion tube 120. By inserting the optical fiber cable 1 into a central through hole 52 of the sealing member 50, the airtightness between the inner surface 122 of the cable insertion tube 120 and the optical fiber cable 1 is secured by the sealing member 50. An outer diameter of the central through hole 52 of the sealing member 50 is slightly larger than an outer diameter of the optical fiber cable 1, and a planar shape of the central through hole 52 is formed in a perfect circle shape. Therefore, when the roundness of the cable sheath 7 is high, airtightness between the optical fiber cable 1 and the sealing member 50 is secured. On the other hand, when the roundness of the cable sheath 7 is low, a gap is formed between the optical fiber cable 1 and the sealing member 50, and as a result, the airtightness between the optical fiber cable 1 and the sealing member 50 decreases.

The cable pump 100 is provided with an air blowout space 150 in communication with the cable insertion tube 120 and a duct insertion tube 160. The air blowout space 150 is provided with an air blow outlet 130 through which air is sent out. An air flow K1, which is a part of an air flow sent out from the air blow outlet 130, is directed toward an inside of the duct 140 inserted into the duct insertion tube 160. On the other hand, an air flow K2, which is the other part of the air flow sent out from the air blow outlet 130, is directed toward the cable insertion tube 120. Here, when the airtightness between the optical fiber cable 1 and the sealing member 50 is secured, most of the air flow sent out from the air blow outlet 130 is directed to the inside of the duct 140. In this way, a pull-in force of the air flow from the inlet end to an outlet end of the duct 140 increases, and a pumping distance of the optical fiber cable 1 increases.

In this respect, in the present embodiment, since the roundness of the cable sheath 7 is 85% or more, a gap formed between the optical fiber cable 1 and the inner surface 122 of the cable insertion tube 120 can be suitably closed by the sealing member 50. Therefore, the airtightness between the optical fiber cable 1 and the inner surface 122 of the cable insertion tube 120 can be increased. More specifically, as the roundness of the cable sheath 7 increases, the outer shape of the cable sheath 7 and an outer shape of the central through hole 52 substantially match with each other, so that air is suitably prevented from leaking from the central through hole 52 of the sealing member 50 toward the cable insertion tube 120. In this way, the airtightness between the optical fiber cable 1 and the sealing member 50 is suitably secured.

In this way, since a part of the air flow sent out from the air blow outlet 130 toward the inside of the duct 140 is suitably prevented from flowing into the cable insertion tube 120, the pull-in force of the air flow from the inlet end to the outlet end of the duct 140 is increased, and the pumping distance of the optical fiber cable 1 can be extended.

Next, in order to evaluate a relationship between the roundness of the cable sheath 7 and the pumping distance of the optical fiber cable 1, an air pumping test was performed in which the optical fiber cable 1 in which eight tension members are arranged at equal intervals along the circumferential direction was air-pumped into a micro-duct. The optical fiber cable used in the air pumping test has 432 cores and an outer diameter of 10 mm. The micro-duct used had an inner diameter of 14 mm. The air pumping test is based on IEC 60794-1-21. A length of the micro-duct was 1000 m, and the micro-duct is folded back at a position of 100 m. A radius of curvature at the position where the micro-duct is folded back is 40 times the inner diameter of the micro-duct.

Table 1 below shows measurement results of the pumping distance of the optical fiber cable 1 with respect to the roundness of the cable sheath 7. In the air pumping test, the pumping distance was measured for six types of roundness (83%, 85%, 88%, 90%, 92%, and 95%). In the test, when the pumping distance was 1000 m or more, an evaluation was A, when the pumping distance was 800 m or more and less than 1000 m, the evaluation was B, and when the pumping distance was less than 800 m, the evaluation was C. As shown in Table 1, it was confirmed that the pumping distance was 1000 m or more when the roundness of the cable sheath 7 was 85% or more. On the other hand, it was confirmed that the pumping distance was less than 800 m when the roundness of the cable sheath 7 was 83%. As described above, when the roundness of the cable sheath 7 is 85% or more, the airtightness between the optical fiber cable 1 and the sealing member 50 is sufficiently secured, and thus it is considered that the pumping distance of the optical fiber cable 1 can be sufficiently secured. In addition, even when an air pumping test in which the optical fiber cable 1a in which six tension member groups in each of which two tension members are paired are arranged at equal intervals along the circumferential direction is air-pumped into the micro-duct was performed, it was confirmed that the pumping distance of the optical fiber cable 1a is evaluated as A when the roundness of the cable sheath 7 is 85% or more.

**[Table 1]**

| Table 1: Relationship between Roundness and Pumping Distance | | | | | | |
|---|---|---|---|---|---|---|
| Sample Number | 1 | 2 | 3 | 4 | 5 | 6 |
| Roundness | 83% | 85% | 88% | 90% | 92% | 95% |
| Pumping Distance | C (< 800 m) | A (≥ 1000 m) | A | A | A | A |

The roundness of the cable sheath 7 is preferably as close to 100% as possible, but it is difficult to form the cross-sectional shape of the cable sheath 7 into a perfect circle (roundness of 100%). In addition, when the cross-sectional shape of the cable sheath 7 is not a perfect circle, it is possible to suitably prevent a situation in which the optical fiber cable 1 rotates around an axial direction when the optical fiber cable 1 is air-pumped into the duct 140. Therefore, the roundness of the cable sheath 7 is preferably 85% or more and 99% or less.

Although the present embodiment has been described above, it goes without saying that the technical scope of the present invention should not be interpreted to be limited by the description of the embodiment. The present embodiment is merely an example, and it is understood by those skilled in the art that various modifications can be made to the present embodiment within the scope of the invention described in the claims. In this way, the technical scope of the present invention should be defined based on the scope of the invention described in the claims and the scope of equivalents thereof.

### REFERENCE SIGNS LIST

1, 1a: optical fiber cable
2, 2a: tension member
3: optical fiber
4: optical fiber ribbon
6: water absorption tape
7, 70: cable sheath
20: tension member group
50: sealing member
52: central through hole
100: cable pump
120: cable insertion tube
122: inner surface
130: air blow outlet
140: duct
150: air blowout space
160: duct insertion tube
D1: circumferential direction
S: storing space

## Claims

1. An optical fiber cable comprising:
a plurality of optical fibers;
a cable sheath covering the plurality of optical fibers; and
a plurality of tension member groups embedded in the cable sheath,
wherein each of the plurality of tension member groups comprises at least one tension member, and
wherein in a cross section of the optical fiber cable perpendicular to a longitudinal direction of the optical fiber cable, roundness of the cable sheath is 85% or more.

2. The optical fiber cable according to claim 1,
wherein the plurality of tension member groups are arranged at equal intervals along a circumferential direction of the optical fiber cable.

3. The optical fiber cable according to claim 2,
wherein a number of the plurality of tension member groups is six or more.

4. The optical fiber cable according to any one of claims 1 to 3,
wherein the optical fiber cable is a slotless cable.

5. A method for manufacturing the optical fiber cable according to any one of claims 1 to 4, the method comprising:
a step of forming the cable sheath by an extruder to cover the plurality of optical fibers; and
a step of cooling the formed cable sheath,
wherein vacuum sizing is applied in the cooling step.
